# FASCICULE DE BREVET EUROPEEN

(11) **EP 3 398 345 B1**
(45) Date de publication et mention de la délivrance du brevet: **15.12.2021**
(21) Numéro de dépôt: 16820314.9
(22) Date de dépôt: 30.12.2016
(51) Int. Cl.: H04N 21/443, H04N 21/4627, H04N 21/81, H04N 21/8358

(54) **PROCÉDÉ ET DISPOSITIF DE TRAITEMENT DE FLUX MULTIMÉDIA POUR VÉRIFICATION DES DROITS D'ACCÈS**
VERFAHREN UND VORRICHTUNG ZUR VERARBEITUNG EINES MULTIMEDIA-DATENSTROMS ZUR ÜBERPRÜFUNG VON ZUGRIFFSRECHTEN
METHOD AND DEVICE FOR PROCESSING A MULTIMEDIA STREAM TO VERIFY ACCESS RIGHTS

(30) Priorité: 30.12.2015 FR 1563460
(43) Date de publication de la demande: 07.11.2018
(73) Titulaire: Viaccess, 92057 Paris La Défense Cedex (FR)
(72) Inventeur: HAMON, Vincent, 35000 Rennes (FR)
(74) Mandataire: Lavoix
(86) Numéro de dépôt international: PCT/EP2016/082940
(87) Numéro de publication internationale: WO 2017/114958

(56) Documents cités:
- US-A1- 2011 150 433
- US-A1- 2014 379 823
- Anonymous: "Plug-in Basics - Plugins | MDN", , 4 septembre 2015 (2015-09-04), XP055289702, Extrait de l'Internet: URL:http://web.archive.org/web/20150904022 234/https://developer.mozilla.org/en-US/do cs/Plugins/Guide/Plug-in_Basics [extrait le 2016-07-19]
- Anonymous: "Adobe Flash - Mozilla | MDN", , 15 septembre 2014 (2014-09-15), XP055289599, Extrait de l'Internet: URL:http://web.archive.org/web/20140915141 208/https://developer.mozilla.org/en-US/Ad d-ons/Plugins/Scripting_Plugins_Adobe_Flas h [extrait le 2016-07-19]

## Description

La présente invention concerne un procédé de traitement de flux multimédia, notamment pour vérification des droits d'accès à un contenu dudit flux multimédia, et un dispositif de traitement de flux multimédia associé.

Elle se situe dans le domaine du traitement des flux multimédia, en particulier en vue de la lutte contre la diffusion illicite de contenus multimédia soumis à des droits d'accès.

Le développement récent des dispositifs ayant des capacités de communication sans fil, et la capacité de transférer, via des réseaux de communication associés, des grandes quantités de données a permis de généraliser l'accès à des contenus multimédia.

Ainsi, de très nombreux contenus multimédia sont mis à disposition par des serveurs, sous forme de flux multimédia téléchargeables par un dispositif client, via des pages formatées en langage de balisage. Pour obtenir et afficher de telles pages, le dispositif client utilise un navigateur de données formatées selon un langage de balisage, communément appelé navigateur Internet ou « web browser » en anglais. Les flux multimédia téléchargés peuvent transporter des contenus de type film, série ou documentaire, pré-enregistrés, ou des contenus de première diffusion, par exemple des évènements sportifs ou artistiques. Dans tous les cas, ces contenus sont protégés, c'est-à-dire que leur utilisation est conditionnée par la détention de droits d'accès dont l'acquisition permet notamment d'assurer la rémunération des ayant droits.

De tels flux multimédia peuvent être rendus accessibles par des diffuseurs non autorisés, et leur accès n'est pas soumis dans ce cas aux redevances dues aux ayants droit. Dans ce cas, on parle de diffusion illicite et de contenus multimédia piratés.

La quantité de flux multimédia distribués via le réseau Internet rend inenvisageable toute analyse manuelle, impliquant des opérateurs humains, pour détecter efficacement la diffusion illicite.

Il existe donc un besoin d'automatiser le traitement de flux multimédia en vue de la détection de la diffusion illicite des contenus.

Il existe des techniques de tatouage ou marquage de données numériques, notamment de tatouage de flux de données d'images ou de données vidéo, permettant d'insérer dans ces flux des informations relatives aux droits d'accès à ces flux, ces informations étant par ailleurs imperceptibles pour l'œil humain, mais décodables par un traitement logiciel adapté. De telles techniques sont utilisables pour analyser des flux multimédia et détecter des flux multimédia piratés à condition d'être en mesure de récupérer et d'enregistrer les flux multimédia concernés.

Or la récupération et l'enregistrement de flux multimédia mis à disposition par des serveurs illicites pose divers problèmes. De plus, même des fournisseurs de contenus licites sont susceptibles, à leur insu, de diffuser des contenus piratés dont les droits d'accès ne sont pas respectés.

D'une part, en pratique, dans de nombreux cas, les adresses Internet ou URL (pour « Uniform Ressource Locator ») indiquant la source des flux multimédia téléchargés sont obfusquées, ou obscurcies, c'est-à-dire rendues difficiles à extraire du système, de manière à rendre tout accès direct difficile.

D'autre part, des logiciels de lecture de flux vidéo propriétaires sont parfois nécessaires, et les flux vidéo peuvent être fournis dans des formats encodés nécessitant un décodage spécifique à effectuer par un tel logiciel.

Enfin, il est courant de diffuser, dans un même flux multimédia à afficher par un navigateur, plusieurs flux vidéo en plus du flux vidéo principal encapsulant le contenu soumis à des droits d'accès, notamment des flux vidéo additionnels contenant des publicités, ou des logos ou d'autres contenus, affichés en superposition sur le flux vidéo principal. Dans ce cas, il est nécessaire d'extraire le flux vidéo principal à partir du ou des flux multimédia transmis.

Il existe des méthodes adaptées pour analyser des interfaces graphiques d'affichage et pour simuler le comportement d'un utilisateur, de façon à effectuer une suite d'actions permettant de sélectionner le flux vidéo principal affiché, mais de telles méthodes sont complexes, nécessitent un apprentissage préalable et ne permettent pas de distinguer entre flux vidéo principal et flux vidéo additionnels.

Le document US2011/150433 A1 décrit une méthode de séparation entre contenus statiques et contenus vidéo présentés sur un écran.

Le document US2014/0379823 A1 décrit un système de messagerie multimédia (MMS).

L'invention a pour but de remédier aux inconvénients de l'état de la technique.

A cet effet, l'invention propose un procédé de traitement de flux multimédia conforme à la revendication 1.

Avantageusement, l'invention permet d'enregistrer une ou plusieurs images numériques correspondant à un flux vidéo extrait d'un flux multimédia téléchargé dans un navigateur, coopérant avec un logiciel de lecture de flux multimédia, sans nécessiter aucune connaissance préalable du logiciel de lecture de flux multimédia utilisé.

Le procédé de traitement de flux multimédia selon l'invention peut présenter une ou plusieurs des caractéristiques selon les revendications dépendantes 2 à 7.

Selon un autre aspect, l'invention propose un dispositif de traitement de flux conforme à la revendication 8.

Selon un autre aspect, l'invention propose un programme d'ordinateur comportant des instructions pour mettre en œuvre les étapes d'un procédé de traitement de flux multimédia tel que brièvement décrit ci-dessus lors de l'exécution du programme par un processeur d'un dispositif programmable.

D'autres caractéristiques et avantages de l'invention ressortiront de la description qui en est donnée ci-dessous, à titre indicatif et nullement limitatif, en référence aux figures annexées, parmi lesquelles :
- la figure 1 représente schématiquement un système mettant en œuvre un procédé de traitement de flux multimédia selon un mode de réalisation de l'invention;
- la figure 2 représente un exemple d'affichage comprenant une pluralité de zones d'affichage destinées à afficher des flux vidéo ;
- la figure 3 est un synoptique des principales étapes mises en œuvre par un procédé de traitement de flux multimédia selon un mode de réalisation de l'invention ;
- la figure 4 est un synoptique des principales étapes mises en œuvre pour la détermination des paramètres d'identification de chaque zone d'affichage allouée; et
- la figure 5 est un synoptique des principales étapes mises en œuvre pour la détermination de la zone d'affichage associée au flux vidéo principal selon un mode de réalisation de l'invention.

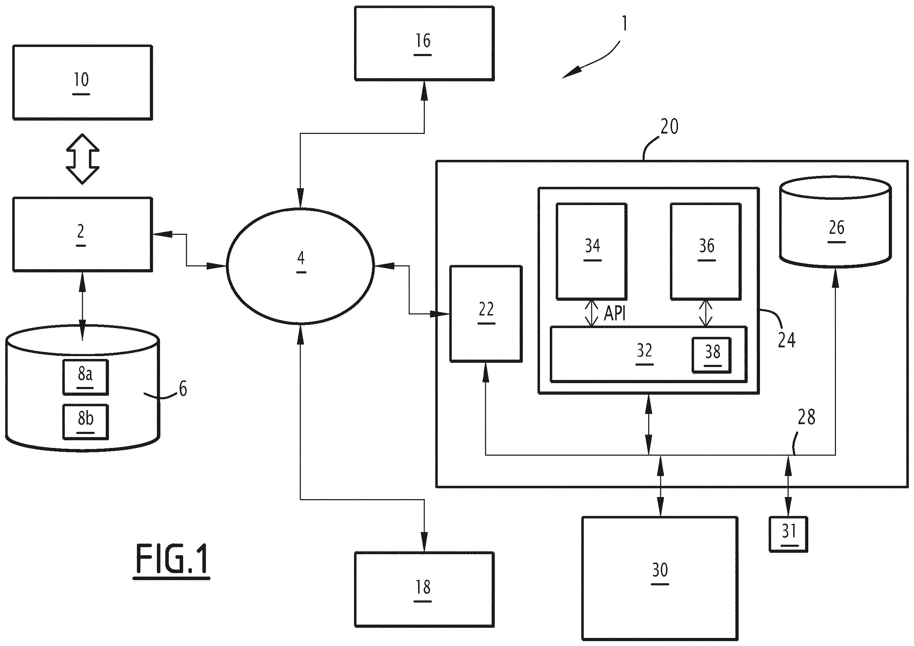

La figure 1 illustre schématiquement un système 1 mettant en œuvre des communications client-serveur via un réseau de communications, par exemple le réseau Internet.

Dans ce système 1 on a représenté schématiquement un dispositif serveur 2 connecté à un réseau de communications 4, et comprenant également un système de stockage 6, qui peut être distribué. Le système de stockage 6 comprend des contenus multimédia 8a, 8b, et ainsi de suite, qui sont, dans cet exemple de réalisation, préalablement enregistrés.

Par exemple, dans le contexte d'un serveur de vidéos à la demande, ou serveur de VOD, pour « Video On Demand », en anglais, les contenus multimédia sont par exemple des contenus vidéos comprenant des images et du son, par exemple des films, documentaires, séries télévisées, encodés selon un format de codage approprié.

En variante, le serveur 2 reçoit des contenus multimédia sous forme de flux multimédia d'un diffuseur de contenu 10, par exemple via un autre réseau de communications que le réseau de communications 4, par exemple un réseau de communication par satellite. Par exemple, ces flux multimédia reçus correspondent à une diffusion en temps réel d'un évènement artistique ou sportif, typiquement un spectacle ou une rencontre sportive.

Le système 1 comprend également des dispositifs clients 16, 18, 20, ces dispositifs clients étant connectés également au réseau de communications 4.

Le dispositif client 20 est détaillé sur la figure 1, les autres dispositifs clients ayant une structure analogue.

Le dispositif client 20 est, dans un mode de réalisation, un dispositif programmable, par exemple un ordinateur, comprenant une unité 22 de communication avec le réseau de communication 4, apte à envoyer et à recevoir des données selon un protocole de communication adapté, par exemple le protocole IP (pour « Internet Protocol »).

Le dispositif client 20 comporte également une unité centrale de calcul 24, comportant un ou plusieurs processeurs, apte à exécuter des instructions de programme informatique lorsque le dispositif 20 est mis sous tension. Le dispositif 20 comporte également une unité de stockage d'informations 26, par exemple des registres, apte à stocker des données et des instructions de code exécutable permettant la mise en œuvre de programmes comportant des instructions de code aptes à mettre en œuvre le procédé selon l'invention. Les divers blocs fonctionnels du dispositif 20 décrits ci-dessus sont connectés via un bus de communication 28.

Le dispositif programmable 20 comprend ou est connecté à un écran d'affichage 30. Optionnellement, le dispositif programmable 20 comprend une interface 31 d'interaction avec l'utilisateur, par exemple clavier, souris ou tout autre moyen de pointage. Dans un mode de réalisation, l'écran d'affichage 30 est de type tactile et forme également une interface d'interaction 31 avec un utilisateur.

L'unité centrale de calcul 24 comporte des modules logiciels, notamment un module logiciel 32, qui implémente un protocole de communication de données, par exemple le protocole de transfert hypertexte ou HTTP pour HyperText Transfer Protocol, pour obtenir des données et/ou instructions fournies par des serveurs 2 implémentant le même protocole de communication, et fournit un rendu sur l'écran 30 de données visualisables extraites des données et/ou instructions obtenues.

Les données visualisables comprennent du texte, des images fixes, des vidéos.

Le module logiciel 32 est un module de navigation réseau et d'affichage, couramment désigné par le terme de navigateur Internet (en anglais, « Web Browser »), ou simplement « navigateur », dont la fonction principale est la consultation d'informations disponibles sur le réseau World Wide Web.

Le navigateur utilise une adresse Internet ou URL (pour « Uniform Ressource Locator »), indiquant la localisation d'une page, appelée couramment page Web, ensemble de ressources contenant des données et/ou des instructions sur un serveur implémentant le protocole http, et télécharge la page visée.

Une telle page web, comprend des données formatées selon un langage de balisage, par exemple HTML (Hypertexte Markup Language), ce langage fournissant le texte à afficher ainsi que la structure générale de la mise en page : titres et paragraphes, listes, tableaux. La mise en page peut être raffinée par l'utilisation de feuilles de style en cascade (CSS) : marges, alignements, espacements, couleurs, bordures, etc.

De manière classique, un navigateur est apte à communiquer avec un ou plusieurs logiciels de lecture de flux multimédia (module logiciel 34). Un tel logiciel est appelé également « player » en terminologie anglo-saxonne. Plus généralement, un navigateur est apte à faire exécuter des logiciels d'extension compatibles pour apporter des fonctionnalités supplémentaires.

La communication entre le navigateur et tout logiciel d'extension se fait par l'intermédiaire d'interfaces de programmation, ou API pour « Application Programming Interface » en anglais, définissant des fonctions de communication entre le navigateur et tout logiciel d'extension, permettant de réaliser des fonctionnalités, transmettre des informations et des valeurs de paramètres.

Par exemple, le navigateur MozillaFirefox ^{®} utilise une interface appelée NPAPI pour *Netscape Plugin Application Programming Interface.*

De manière générale, tout navigateur a une interface de programmation associée destinée à permettre à des logiciels externes de s'interfacer avec le navigateur et apporter des fonctionnalités supplémentaires.

Dans une variante de réalisation, le logiciel de lecture de flux multimédia est intégré dans le navigateur 32, par exemple dans le cas des navigateurs HTML5. Dans ce cas, des API internes sont utilisées, le fonctionnement étant analogue à celui décrit ci-dessus.

De plus, un module logiciel 36 est ajouté, comprenant des instructions de code de mise en œuvre d'un procédé de traitement de flux multimédia selon l'invention, dont des modes de réalisation seront décrits en détail ci-après.

Le navigateur 32 est apte à réaliser l'affichage de contenus destinés à la visualisation sur un écran d'affichage 30.

Pour réaliser un tel affichage, un navigateur 32 utilise soit un moteur de composition graphique interne 38, soit un moteur de composition graphique externe (non représenté), qui est un moteur de composition du système d'exploitation mis en œuvre dans le dispositif programmable 20.

Chaque contenu est associé à un élément à afficher (image fixe ou flux vidéo), auquel le moteur de composition graphique associe une zone d'affichage réservée sur l'écran d'affichage 30.

Chaque élément est alors affiché sous forme d'un ensemble de pixels de la zone d'affichage réservée, chaque pixel étant une unité d'affichage sur un écran et ayant une valeur associée codée sur plusieurs bits. Les valeurs des pixels à afficher à un instant donné sont des données d'image numérique formant une image à afficher.

Lorsque l'élément à afficher est un flux vidéo, les valeurs des pixels de la zone d'affichage sont rafraîchies à une fréquence temporelle déterminée par le format de codage du flux vidéo.

Une zone d'affichage a une forme géométrique plane, par exemple rectangulaire, et est caractérisée par des paramètres caractérisant la forme géométrique plane, sa position sur l'écran d'affichage et sa profondeur Z, permettant de définir un plan de profondeur associé et de définir une hiérarchie de profondeur entre les zones d'affichage.

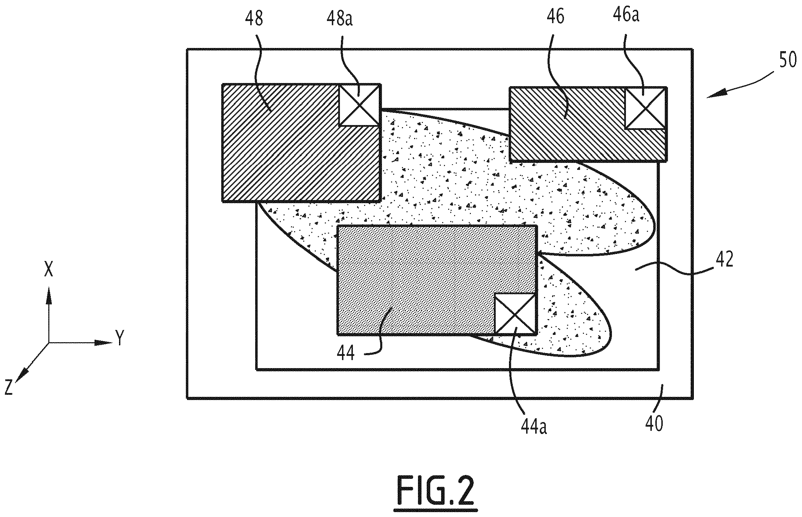

Par exemple, une zone d'affichage rectangulaire est définie par un paramètre de position, des paramètres de longueur L, largeur I selon les axes X et Y d'un référentiel spatial associé et de profondeur Z. Un référentiel spatial (X, Y, Z) est illustré à la figure 2.

Ainsi, dans l'exemple de la figure 2, une page à afficher 50 comprend une zone 40 de fond d'écran ayant une profondeur associée Z₀, par exemple égale à 0.

Une deuxième zone 42, contenant l'élément à afficher qu'on souhaite visualiser, qui contient le flux vidéo principal, est affichée avec une profondeur associée Z₁>Z₀.

Cependant, plusieurs zones d'affichage supplémentaires, 44, 46, 48, de plus petites tailles, sont affichées par-dessus, comprenant par exemple des contenus de type : flux vidéo publicitaire, des logos ou du texte d'information.

Dans l'exemple illustré, les zones d'affichage 44, 46, 48 ont des profondeurs associées Z₂, Z₃, Z₄, qui peuvent être égales, mais toutes supérieures à Z₁.

De manière classique, un utilisateur souhaitant visualiser le flux vidéo principal affiché dans la zone d'affichage 42 agit sur des zones d'interaction 44a, 46a, 48a associées aux zones d'affichage pour fermer les zones d'affichage ou fenêtres 44, 46, 48.

Alternativement, une durée d'affichage est associée à chaque zone d'affichage 44, 46, 48 dans le fichier de définition de la page à afficher.

Le procédé de traitement de flux multimédia selon l'invention a pour objet d'identifier la zone d'affichage principale correspondant au flux vidéo principal à afficher, et à enregistrer, successivement, des images du flux vidéo principal à partir des valeurs des pixels d'affichage dans la zone d'affichage identifiée.

Ainsi, avantageusement, le procédé selon l'invention ne nécessite pas la connaissance du mode de fonctionnement du logiciel de lecture de flux vidéo ni du format de codage des flux vidéo reçus.

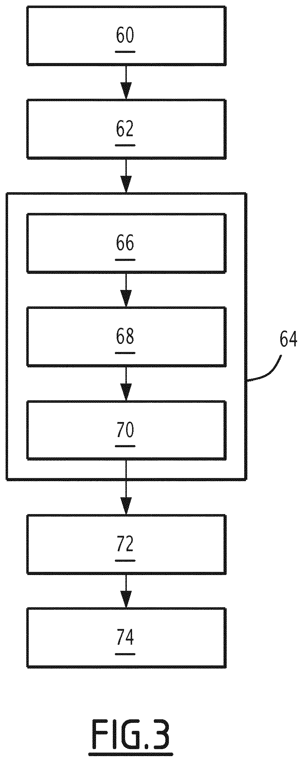

La figure 3 est un synoptique des principales étapes d'un procédé de traitement de flux multimédia selon un mode de réalisation de l'invention, mis en œuvre par un processeur d'un dispositif programmable 20.

Le procédé comprend une première étape 60 d'obtention de données formatées selon un langage de balisage, par exemple sous forme d'une page web téléchargée à partir d'un serveur, comportant des instructions d'affichage exécutables par le navigateur pour l'affichage d'un ou plusieurs flux multimédia, contenant notamment du texte, des images et un ou plusieurs flux vidéos à afficher. Cette étape d'obtention de données est mise en œuvre par le navigateur 32.

L'étape 60 est suivie d'une étape 62 de déclenchement de l'exécution par le navigateur 32 de la page web obtenue pour la réalisation de l'affichage.

Cette étape 62 est suivie d'une étape 64 de détermination d'une zone d'affichage allouée pour l'affichage d'un flux vidéo principal contenu dans le ou les flux multimédia téléchargés, mise en œuvre par le module logiciel 36, et utilisant l'analyse des commandes échangées entre le navigateur et le logiciel de lecture de flux multimédia.

On note qu'on considère ici le cas d'un logiciel de lecture de flux multimédia, mais il est entendu que le fonctionnement est analogue si plusieurs logiciels de lecture de flux multimédia différents sont mis en œuvre.

L'étape 64 comprend une sous-étape 66 d'interception, par le module logiciel 36, d'une commande de création ou d'initialisation d'une instance exécutable d'un logiciel de lecture de flux multimédia, en fonction de l'interface de programmation (API) fournie par le navigateur.

Par exemple, lorsque l'API est NPAPI, une commande *NP_Initialize()* est exécutée pour initialiser une instance exécutable du logiciel de lecture de flux multimédia en tant qu'extension du navigateur. Ensuite, des instances de ce logiciel de lecture de flux multimédia sont initialisées via des commandes *NPP_New().*

De manière plus générale, les fonctions préfixées par « *NPP_* » indiquent une commande envoyée depuis le navigateur vers le logiciel de lecture de flux multimédia, et plus généralement vers un logiciel d'extension, alors que les fonctions préfixées par *« NPN_* » indiquent une commande envoyée par un logiciel d'extension vers le navigateur.

Suite à l'interception d'une commande relative à la création ou à l'initialisation d'une instance exécutable du logiciel de lecture de flux vidéo, une sous-étape 68 de détermination des paramètres d'identification de chaque zone d'affichage allouée pour l'affichage d'un flux vidéo, dans laquelle le logiciel de lecture de flux multimédia fournira un contenu vidéo à afficher sous forme de valeurs de pixels à afficher.

Divers modes de réalisation de la détermination 68 des paramètres d'identification de chaque zone d'affichage allouée sont envisagés, comme expliqué en détail ci-après, selon le mode d'affichage utilisé.

Le cas échéant, si plusieurs zones d'affichage sont identifiées pour l'affichage de divers flux vidéo, comme dans l'exemple illustré à la figure 2, l'étape 68 est suivie d'une étape 70 de détermination de la zone d'affichage principale associée au flux vidéo principal à afficher, qui contient le contenu d'intérêt et qui est susceptible d'être diffusé de manière illicite, les autres flux vidéos étant des flux vidéo additionnels, par exemple de type publicité.

L'étape 64 de détermination d'une zone d'affichage allouée pour l'affichage du flux vidéo principal est suivie d'une étape 72 d'enregistrement des valeurs des pixels affichés dans la zone d'affichage principale, associée au flux vidéo principal.

Par exemple, l'enregistrement est effectué à une fréquence temporelle d'enregistrement qui peut être prédéterminée.

Par exemple, l'enregistrement est effectué en fonction des commandes de mise à jour de la zone d'affichage principale, interceptées par une étape d'interception des commandes préalable.

Ainsi, une succession donnée d'images sont enregistrées, et sont traitées par la suite lors d'une étape de traitement 74. Le traitement consiste par exemple en l'analyse des données d'images enregistrées pour extraire des informations de marquage, par des méthodes de marquage indélébile et imperceptible ou watermarking, ces informations de marquage permettant d'obtenir des informations relatives au droit d'accès aux contenus du flux vidéo correspondant.

En option, l'étape de traitement 74 met également en œuvre des traitements d'analyse des données d'images enregistrées permettant d'en éliminer une partie, afin de ne conserver que les données d'images appartenant au flux vidéo principal et non les données d'images appartenant par exemple à des écrans de transition ou à des vidéo publicitaires qui seraient incrustées dans le flux multimédia reçu comprenant le flux vidéo principal.

Des méthodes connues de l'homme du métier peuvent être utilisées à cet effet.

Par exemple, des images successives sont comparées et des images fixes sont détectées et éliminées.

De plus, des images noires ou plus généralement uniformes sont également éliminées, ces images correspondant vraisemblablement à des écrans de transition.

Enfin, une fréquence élevée de changement de scène indique un contenu publicitaire, donc des images successives avec un fort taux de changement de scène sont éliminées.

A l'inverse, une fréquence de changement faible détectée est considérée comme caractéristique d'un évènement sportif ou d'une chaîne de diffusion, donc les images sont conservées.

La mise en œuvre de l'étape 68 de détermination des paramètres d'identification de chaque zone d'affichage allouée pour l'affichage d'un flux vidéo dépend du mode d'affichage mis en œuvre.

Lorsque l'API NPAPI est utilisée, deux modes d'affichage sont distingués : un premier mode d'affichage, dit sans fenêtre, ou « windowless », dans lequel le logiciel de lecture de flux multimédia affiche le flux vidéo décodé directement via le navigateur, et un deuxième mode d'affichage, dit à fenêtres, ou « windowed », dans lequel le navigateur alloue une fenêtre d'affichage au logiciel de lecture de flux multimédia pour l'affichage.

La fonction « *NPP-SetWindow()* » est utilisée pour l'allocation d'une zone d'affichage, mais les paramètres utilisés dépendent du mode d'affichage.

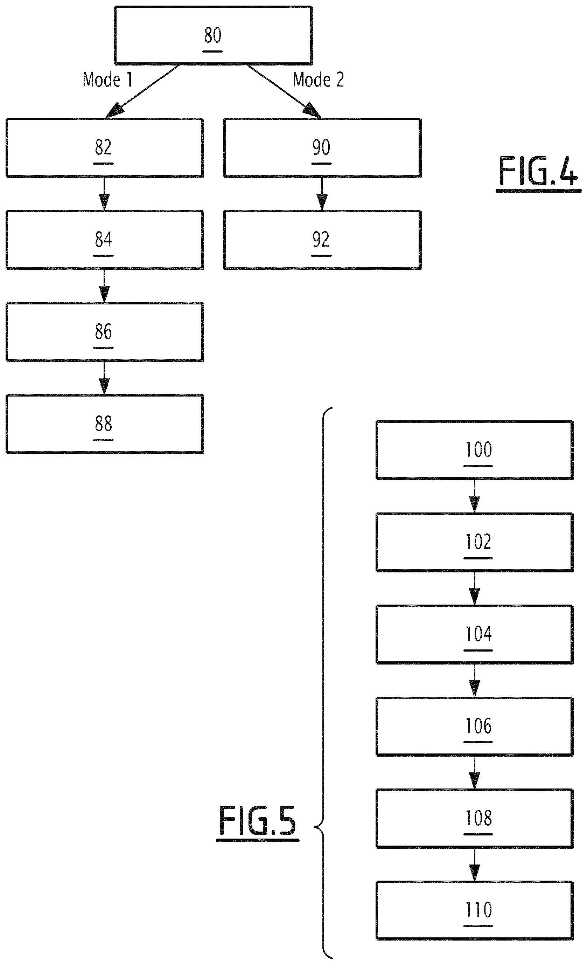

La figure 4 illustre schématiquement les étapes mises en œuvre pour la détermination des zones d'affichage allouées, selon le mode d'affichage, dans un cas où l'environnement d'affichage graphique utilisé est l'environnement X Window ^{®}.

Lors d'une première étape 80 il est déterminé si le mode d'affichage utilisé est le premier mode (mode « windowless ») ou le deuxième mode (mode « windowed »), par détection de la présence d'un paramètre prédéterminé dans la page HTML.

Dans le cas où le mode d'affichage est le premier mode d'affichage, une étape 82 d'interception de la commande « *NPP_SetWindow()* » est mise en œuvre, cette commande prenant comme paramètre un objet définissant la zone d'affichage, appelé « drawable ».

Des commandes « *NPN_InvalidateRect()* » ou « *NPN_InvalidateRegion()* », envoyées par le logiciel de lecture de flux multimédia au navigateur sont interceptées à l'étape 84, ces commandes indiquant la nécessité d'une mise à jour de la zone d'affichage « drawable ».

Ensuite, lors d'une étape 86, une commande « *NPP_HandleEvent()* » est interceptée, cette commande comprenant en paramètre une référence d'identification de la zone d'affichage « drawable » mise à jour.

L'étape 86 est suivie d'une étape 88 d'obtention de la référence d'identification de la zone d'affichage.

Avantageusement, lorsque ce premier mode d'affichage est mis en œuvre, l'interception de la commande « *NPP_HandleEvent()* » permet en même temps de déterminer la mise à jour de la zone d'affichage.

Dans le cas où le mode d'affichage est le deuxième mode d'affichage, l'étape 90 effectue l'interception de la commande « *NPP_SetWindow()* » et est suivie d'une étape 92 d'obtention d'une valeur d'identifiant de fenêtre du système X Window allouée à l'affichage. Cette valeur d'identifiant est transmise au logiciel de lecture de flux vidéo, qui peut alors effectuer l'affichage directement sans en informer le navigateur.

Néanmoins, la valeur d'identifiant de fenêtre obtenue permet de déterminer la zone d'affichage allouée.

Il suffit alors d'enregistrer les valeurs des pixels affichés dans cette zone d'affichage identifiée, avec une fréquence temporelle prédéterminée.

En variante, on modifie le système de fenêtre pour intercepter des avertissements de mise à jour, permettant, comme pour le premier mode d'affichage, de déterminer la mise à jour de la zone d'affichage et d'effectuer un enregistrement des valeurs des pixels affichés seulement suite à une mise à jour de l'affichage.

Comme expliqué ci-dessus, dans la plupart des cas, plusieurs zones d'affichage sont déterminées, auquel cas une étape de détermination de la zone d'affichage principale correspondant au flux vidéo principal est mise en œuvre.

La figure 5 est un synoptique des principales étapes mises en œuvre pour la détermination de la zone d'affichage principale parmi une pluralité de zones d'affichage, selon un mode de réalisation de l'invention.

Pour cette détermination, on met en œuvre au moins une heuristique simple, permettant de calculer un score final associé à chaque zone d'affichage déterminée, et de sélectionner comme zone d'affichage principale la zone obtenant le meilleur score final.

Dans le mode de réalisation de la figure 5, on met en œuvre une première étape 100 d'obtention des paramètres de position d'affichage, de taille et de profondeur des zones d'affichage S₁ à S_{N} déterminées.

Ensuite, on met en œuvre plusieurs heuristiques permettant d'associer à chacune des N zones d'affichage un score selon chacune de ces heuristiques.

Lors d'une étape 102, on détermine la surface de chacune des zones S₁ à S_{N}, et on associe des scores décroissants en fonction de la surface occupée, la zone de surface maximale ayant le meilleur score selon cette heuristique de surface.

En reprenant l'exemple de la figure 2, dans lequel la zone de fond d'écran 40 est éliminée car n'est pas affichée via un logiciel de lecture de flux multimédia, on distingue N=4 zones d'affichage restantes 42, 44, 46 et 48.

La zone 42 a la surface la plus grande, suivie des zones 44, 48 et 46.

Lors d'une étape 104, on détermine le ratio longueur/largeur du rectangle correspondant à chaque zone d'affichage, et on le compare à une valeur prédéterminée, par exemple 4/3 ou 16/9 qui sont les ratios les plus utilisés pour l'affichage des flux principaux.

On classe alors les zones d'affichage en fonction de la distance entre le ratio obtenu et la valeur prédéterminée. La zone au ratio le plus proche de la valeur prédéterminée recevant le meilleur score selon cette heuristique de format.

Lors d'une étape 106, on détermine, en fonction de la valeur de profondeur Zᵢ associée à chaque zone d'affichage Sᵢ, le nombre de zones superposées sur chacune des zones d'affichage. Par hypothèse, les zones d'affichage correspondant à des contenus publicitaires sont positionnées au-dessus de la zone d'affichage principale.

Dans le cas de la figure 2, la zone 42 a 3 zones d'affichage superposées ou la chevauchant au moins partiellement, alors que les trois autres zones d'affichage sont au premier plan. La zone d'affichage 42 reçoit donc le meilleur score selon cette heuristique de profondeur.

Lors d'une étape 108, on détermine le centrage par rapport à l'écran d'affichage de chacune des zones, par exemple par la distance entre le centre de chaque zone d'affichage et le centre de la surface totale d'affichage de l'écran. Pour cette heuristique de centrage également, c'est la zone d'affichage 42 qui obtient le meilleur score, car elle est centrée.

Enfin les scores de chaque zone d'affichage relatifs aux diverses heuristiques sont combinés en un score final, et on sélectionne, lors de l'étape 110, la zone d'affichage obtenant le meilleur score final comme zone d'affichage principale correspondant à l'affichage du flux vidéo principal.

Dans un mode de réalisation, la combinaison consiste à calculer un score final comme somme pondérée des scores obtenus pour chaque heuristique mise en œuvre, et le score final maximal, ou le score final minimal, est sélectionné comme étant le meilleur.

En variante, la zone d'affichage sélectionnée est la zone ayant obtenu le plus grand nombre de meilleurs scores selon les diverses heuristiques utilisées, c'est-à-dire que le score final d'une zone est donc le nombre de meilleurs scores obtenus par cette zone selon les diverses heuristiques utilisées, et le score final maximal est sélectionné comme étant le meilleur.

Selon un mode de réalisation, une seule ou une partie des heuristiques décrites ci-dessus est mise en œuvre pour déterminer la zone d'affichage principale.

En supplément, d'autres méthodes de détermination de zone d'affichage principale sont mise en œuvre, combinant les heuristiques décrites ci-dessus et des méthodes d'analyse de contenu permettant de détecter par exemple des vidéos publicitaires et par conséquent d'éliminer la zone d'affichage déterminée associée à une telle vidéo.

Par exemple, on peut retenir les deux ou trois zones d'affichage ayant obtenu les meilleurs scores finaux et ensuite en analyser le contenu sur une certaine période temporelle allant d'un seul échantillon d'image à plusieurs dizaines d'images pour discriminer la meilleure zone.

Selon une méthode décrite, les valeurs des pixels affichés dans toutes les zones d'affichage déterminées sont d'abord enregistrées, puis une analyse des contenus est effectuée pour déterminer le flux vidéo principal. Cette méthode est sous-optimals car elle nécessite plus de ressources de mémoire et de calcul pour déterminer et extraire un flux vidéo principal à partir du ou des flux multimédia téléchargés.

Les techniques d'analyse de contenu proposées peuvent comporter la détection, d'un écran noir ou d'un élément invariant dans l'image tel qu'un logo identifiant une chaîne TV, ou par exemple une mesure de la fréquence de changements de plan qui rapprochés caractérisent les contenus publicitaires.

## Revendications

1. Procédé de traitement de flux multimédia pour vérification des droits d'accès à un contenu dudit flux multimédia, le flux multimédia étant fourni par un dispositif serveur connecté à un réseau de communication, et téléchargeable par un dispositif client par l'intermédiaire de données formatées selon un langage de balisage, en utilisant un logiciel de navigation et d'affichage de données formatées selon un langage de balisage, coopérant avec un logiciel de lecture de flux multimédia,
le flux multimédia comprenant au moins un flux vidéo affichable sous forme de pixels sur une zone d'affichage d'un écran d'affichage du dispositif client,
**caractérisé en ce qu'**il comporte des étapes consistant à :
- le flux multimédia comportant au moins deux flux vidéo comprenant un flux vidéo principal et au moins un flux vidéo additionnel, le ou chaque flux vidéo additionnel étant affiché en superposition sur le flux vidéo principal, déterminer (64), pour chaque flux vidéo, une zone d'affichage associée, allouée par ledit logiciel de navigation et d'affichage au logiciel de lecture de flux multimédia pour l'affichage dudit flux vidéo extrait dudit flux multimédia, et identifier (70) une zone d'affichage principale, parmi les zones d'affichage déterminées, la zone d'affichage principale étant associée au flux vidéo principal,
l'identification de la zone d'affichage principale comprenant
au moins une étape de calcul d'un score associé à chaque zone d'affichage déterminée parmi :
le calcul (102) d'une surface occupée par chaque zone d'affichage, et une association de scores en fonction de la surface occupée, le meilleur score étant associé à la zone d'affichage ayant la surface maximale,
le calcul (104) d'un ratio entre au moins une première dimension et une deuxième dimension de chaque zone d'affichage, le score associé étant fonction d'une comparaison dudit ratio à une valeur prédéterminée, la zone d'affichage au ratio le plus proche de ladite valeur prédéterminée ayant le meilleur score,
le calcul (106) du nombre de zones d'affichage superposées au moins partiellement sur chaque zone d'affichage, le meilleur score étant attribué à la zone d'affichage ayant le plus grand nombre de zones d'affichage superposées,
le calcul (108) d'un centrage de chaque zone d'affichage par rapport à l'écran d'affichage, le meilleur score étant attribué à la zone d'affichage centrée,
un calcul d'un score final pour chaque zone d'affichage et une sélection comme zone d'affichage principale de la zone d'affichage dont le score final associé est le score final maximal ou minimal,-enregistrer (72) des images numériques formées des valeurs des pixels à afficher dans la zone d'affichage principale déterminée à un instant temporel donné,
- analyser (74) des données d'images numériques enregistrées pour extraire des informations de marquage, ces informations de marquage permettant d'obtenir des informations relatives au droit d'accès aux contenus du flux vidéo principal.

2. Procédé selon la revendication 1, **caractérisé en ce que** l'enregistrement (72) est effectué à une fréquence temporelle prédéterminée, permettant d'enregistrer une pluralité d'images numériques dudit flux vidéo.

3. Procédé selon l'une quelconque des revendications 1 à 2, **caractérisé en ce que** l'étape de détermination (64) d'une zone d'affichage met en œuvre une analyse de commandes échangées entre le logiciel de navigation et d'affichage et le logiciel de lecture de flux multimédia, en fonction d'une interface de programmation fournie par ledit logiciel de navigation et d'affichage.

4. Procédé selon la revendication 3, **caractérisé en ce qu'**il comprend une étape d'interception (66) d'une commande de création ou d'initialisation d'une instance exécutable dudit logiciel de lecture de flux multimédia.

5. Procédé selon l'une des revendications 3 ou 4, **caractérisé en ce qu'**il comprend une étape de détermination de mode d'affichage parmi un premier mode et un deuxième mode par analyse d'une commande d'allocation de zone d'affichage envoyée par le logiciel de navigation et d'affichage et le logiciel de lecture de flux multimédia.

6. Procédé selon la revendication 5, **caractérisé en ce qu'**il comprend, lorsque le mode d'affichage est un premier mode d'affichage, l'interception d'une commande de mise à jour d'une zone d'affichage, et **en ce que** l'enregistrement des valeurs des pixels à afficher dans la zone d'affichage déterminée est effectué suite à ladite interception d'une commande de mise à jour de la zone d'affichage déterminée.

7. Procédé selon l'une quelconque des revendications 1 à 6, dans lequel les valeurs des pixels enregistrées forment une image numérique, **caractérisé en ce qu'**il comprend une étape d'analyse des images numériques enregistrées permettant de déterminer les images numériques appartenant au flux vidéo principal et les images numériques appartenant à un flux vidéo additionnel.

8. Dispositif de traitement de flux multimédia pour vérification des droits d'accès à un contenu dudit flux multimédia, le dispositif de traitement comportant une unité centrale (24) de calcul, une unité (26) de stockage de données, le dispositif de traitement comportant ou étant connecté à un écran d'affichage (30),
le flux multimédia étant fourni par un dispositif serveur connecté à un réseau de communication, et téléchargeable par le dispositif de traitement par l'intermédiaire de données formatées selon un langage de balisage, en utilisant un logiciel (32) de navigation et d'affichage de données formatées selon un langage de balisage, coopérant avec un logiciel (34) de lecture de flux multimédia, le flux multimédia comprenant au moins un flux vidéo affichable sous forme de pixels sur une zone d'affichage (42, 44, 46, 48) dudit écran (30) d'affichage,
**caractérisé en ce qu'**il comporte un module (36) adapté à :
- le flux multimédia comportant au moins deux flux vidéo comprenant un flux vidéo principal et au moins un flux vidéo additionnel, le ou chaque flux vidéo additionnel étant affiché en superposition sur le flux vidéo principal, déterminer, pour chaque flux vidéo, une zone d'affichage (42) associée, allouée par ledit logiciel (32) de navigation et d'affichage au logiciel (34) de lecture de flux multimédia pour l'affichage dudit flux vidéo extrait dudit flux multimédia,
et identifier une zone d'affichage principale, parmi les zones d'affichage déterminées, la zone d'affichage principale étant associée au flux vidéo principal,
l'identification de la zone d'affichage principale comprenant
au moins un calcul d'un score associé à chaque zone d'affichage déterminée parmi :
le calcul d'une surface occupée par chaque zone d'affichage, association de scores en fonction de la surface occupée, le meilleur score étant associé à la zone d'affichage ayant la surface maximale,
le calcul d'un ratio entre au moins une première dimension et une deuxième dimension de chaque zone d'affichage, le score associé étant fonction d'une comparaison dudit ratio à une valeur prédéterminée, la zone d'affichage au ratio le plus proche de ladite valeur prédéterminée ayant le meilleur score,
le calcul du nombre de zones d'affichage superposées au moins partiellement sur chaque zone d'affichage, le meilleur score étant attribué à la zone d'affichage ayant le plus grand nombre de zones d'affichage superposées,
le calcul d'un centrage de chaque zone d'affichage par rapport à l'écran d'affichage, le meilleur score étant attribué à la zone d'affichage centrée,
un calcul d'un score final pour chaque zone d'affichage et une sélection comme zone d'affichage principale de la zone d'affichage dont le score final associé est le score final maximal ou minimal,
- enregistrer des images numériques formées des valeurs des pixels à afficher dans la zone d'affichage (42) principale déterminée à un instant temporel donné,
- analyser des données d'images numériques enregistrées pour extraire des informations de marquage, ces informations de marquage permettant d'obtenir des informations relatives au droit d'accès aux contenus du flux vidéo principal.

9. Programme d'ordinateur comportant des instructions logicielles qui, lorsqu'elles sont mises en œuvre par un dispositif programmable, mettent en œuvre un procédé de traitement de flux multimédia conforme à l'une quelconque des revendications 1 à 7.

## Patentansprüche

1. Verfahren zum Verarbeiten eines Multimediastroms zum Überprüfen von Zugriffsrechten auf einen Inhalt des Multimediastroms, wobei der Multimediastrom von einer mit einem Kommunikationsnetz verbundenen Server-Vorrichtung bereitgestellt wird und von einer Client-Vorrichtung mittels Daten, die gemäß einer Auszeichnungssprache formatiert sind, heruntergeladen werden kann, unter Verwendung einer Navigations- und Anzeigesoftware von Daten, die gemäß einer Auszeichnungssprache formatiert sind, die mit einer Multimediastrom-Wiedergabesoftware zusammenwirkt,
der Multimediastrom umfassend mindestens einen Videostrom, der in Form von Pixeln auf einem Anzeigebereich eines Anzeigeschirms der Client-Vorrichtung angezeigt werden kann,
**dadurch gekennzeichnet, dass** es die Schritte umfasst, die aus Folgendem bestehen:
- dem Multimediastrom, der mindestens zwei Videoströme umfasst, umfassend einen Hauptvideostrom und mindestens einen zusätzlichen Videostrom, wobei der oder jeder zusätzliche Videostrom in Überlagerung mit dem Hauptvideostrom angezeigt wird, Bestimmen (64), für jeden Videostrom, eines assoziierten Anzeigebereichs, der durch die Navigations- und Anzeigesoftware zu der Multimediastrom-Wiedergabesoftware zugewiesen wird, um den aus dem Multimediastrom extrahierten Videostrom anzuzeigen, und Identifizieren (70) eines Hauptanzeigebereichs unter den bestimmten Anzeigebereichen, wobei der Hauptanzeigebereich mit dem Hauptvideostrom assoziiert ist,
die Identifizierung des Hauptanzeigebereichs umfassend
mindestens einen Schritt zur Berechnung einer Bewertung, die mit jedem Anzeigebereich assoziiert ist, der bestimmt wird aus:
Berechnen (102) einer Fläche, die von jedem Anzeigebereich eingenommen wird, und Zuordnen von Bewertungen entsprechend der eingenommenen Fläche, wobei die beste Bewertung, die mit dem Anzeigebereich assoziiert ist, die maximale Fläche aufweist,
Berechnen (104) eines Verhältnisses zwischen mindestens einer ersten Dimension und einer zweiten Dimension von jedem Anzeigebereich, wobei die assoziierte Bewertung abhängig von einem Vergleich des Verhältnisses mit einem vorbestimmten Wert ist, wobei der Anzeigebereich mit dem Verhältnis, das dem vorbestimmten Wert am nächsten liegt, die beste Bewertung aufweist,
Berechnen (106) der Anzahl der sich zumindest teilweise überschneidenden Anzeigeflächen auf jeder Anzeigefläche, wobei die beste Bewertung der Anzeigefläche mit der höchsten Anzahl sich überschneidender Anzeigeflächen zugewiesen wird,
Berechnen (108) einer Zentrierung jedes Anzeigebereichs in Bezug auf den Anzeigebildschirm, wobei die beste Bewertung der zentrierten Anzeigebereich zugewiesen wird,
Berechnen einer Endbewertung für jeden Anzeigebereich und Auswahl des Anzeigebereichs als Hauptanzeigebereich, dessen assoziierte Endbewertung die maximale oder minimale Endbewertung ist,- Aufzeichnen (72) digitaler Bilder, die aus den Werten von Pixeln gebildet werden, die zu einem gegebenen Zeitpunkt in dem Hauptanzeigebereich angezeigt werden sollen,
- Analysieren (74) der aufgezeichneten digitalen Bilddaten, um Markierungsinformationen zu extrahieren, wobei die Markierungsinformationen ermöglichen, um Informationen über das Zugriffsrecht auf den Inhalt des Hauptvideostroms zu erlangen.

2. Verfahren nach Anspruch 1, **dadurch gekennzeichnet, dass** die Aufzeichnung (72) mit einer vorbestimmten Zeitrate durchgeführt wird, die es ermöglicht, eine Vielzahl von digitalen Bildern des Videostroms aufzuzeichnen.

3. Verfahren nach einem der Ansprüche 1 bis 2, **dadurch gekennzeichnet, dass** der Schritt eines Bestimmens (64) eines Anzeigebereichs eine Analyse der zwischen der Navigations- und Anzeigesoftware und der Medienstrom-Wiedergabesoftware ausgetauschten Befehle gemäß einer von der Navigations- und Anzeigesoftware bereitgestellten Programmierschnittstelle implementiert.

4. Verfahren nach Anspruch 3, **dadurch gekennzeichnet, dass** es einen Schritt eines Abfangens (66) eines Befehls zur Erzeugung oder Initialisierung einer ausführbaren Instanz der Medienstrom-Wiedergabesoftware umfasst.

5. Verfahren nach einem der Ansprüche 3 oder 4, **dadurch gekennzeichnet, dass** es einen Schritt eines Bestimmens eines Anzeigemodus aus einem ersten Modus und einem zweiten Modus durch Analysieren eines von der Navigations- und Anzeigesoftware und der Medienstrom-Wiedergabesoftware gesendeten Anzeigebereich-Zuweisungsbefehls umfasst.

6. Verfahren nach Anspruch 5, **dadurch gekennzeichnet, dass** es, wenn der Anzeigemodus ein erster Anzeigemodus ist, ein Abfangen eines Befehls zum Aktualisieren eines Anzeigebereichs umfasst, und dass die Aufzeichnung von Werten der Pixel, die in dem bestimmten Anzeigebereich angezeigt werden sollen, nach Abfangen eines Befehls zum Aktualisieren des bestimmten Anzeigebereichs ausgeführt wird.

7. Verfahren nach einem der Ansprüche 1 bis 6, wobei die aufgezeichneten Pixelwerte ein digitales Bild bilden, **dadurch gekennzeichnet, dass** es einen Schritt einer Analyse der aufgezeichneten digitalen Bilder umfasst, um die digitalen Bilder, die zu dem Hauptvideostrom gehören, und die digitalen Bilder, die zu einem zusätzlichen Videostrom gehören, zu bestimmen.

8. Vorrichtung zur Verarbeitung eines Multimediastroms zur Überprüfung von Zugriffsrechten auf einen Inhalt des Multimediastroms, wobei die Verarbeitungsvorrichtung eine zentrale Recheneinheit (24) und eine Datenspeichereinheit (26) umfasst, wobei die Verarbeitungsvorrichtung einen Bildschirm (30) umfasst oder damit verbunden ist,
wobei der Multimediastrom von einer mit einem Kommunikationsnetz verbundenen Server-Vorrichtung bereitgestellt wird und von der Verarbeitungsvorrichtung mittels Daten, die gemäß einer Auszeichnungssprache formatiert sind, heruntergeladen werden kann, unter Verwendung einer Navigations- und Anzeigesoftware (32) von Daten, die gemäß einer Auszeichnungssprache formatiert sind, die mit einer Medienstrom-Wiedergabesoftware (34) zusammenwirkt, der Multimediastrom umfassend mindestens einen Videostrom, der als Pixel auf einer Anzeigefläche (42, 44, 46, 48) des Bildschirms (30) angezeigt werden kann,
**dadurch gekennzeichnet, dass** es ein Modul (36) umfasst, das zu Folgendem angepasst ist:
- auf den Multimediastrom, der mindestens zwei Videoströme umfasst, umfassend einen Hauptvideostrom und mindestens einen zusätzlichen Videostrom, wobei der oder jeder zusätzliche Videostrom in Überlagerung mit dem Hauptvideostrom angezeigt wird, Bestimmen, für jeden Videostrom, eines assoziierten Anzeigebereichs (42), der durch die Navigations- und Anzeigesoftware (32) zu Multimediastrom-Wiedergabesoftware (34) zugewiesen wird, um den aus dem Multimediastrom extrahierten Videostrom anzuzeigen, und Identifizieren eines Hauptanzeigebereichs unter den bestimmten Anzeigebereichen, wobei der Hauptanzeigebereich mit dem Hauptvideostrom assoziiert ist, die Identifizierung des Hauptanzeigebereichs umfassend
mindestens eine Berechnung einer Bewertung, die mit jedem Anzeigebereich assoziiert ist, die bestimmt wird aus:
Berechnen einer Fläche, die von jedem Anzeigebereich eingenommen wird, Zuordnen von Bewertungen entsprechend der eingenommenen Fläche, wobei die beste Bewertung, die mit dem Anzeigebereich assoziiert ist, die maximale Fläche aufweist,
Berechnen eines Verhältnisses zwischen mindestens einer ersten Dimension und einer zweiten Dimension von jedem Anzeigebereich, wobei die assoziierte Bewertung abhängig von einem Vergleich des Verhältnisses mit einem vorbestimmten Wert ist, wobei der Anzeigebereich mit dem Verhältnis, das dem vorbestimmten Wert am nächsten liegt, die beste Bewertung aufweist,
Berechnen der Anzahl der sich zumindest teilweise überschneidenden Anzeigeflächen auf jeder Anzeigefläche, wobei die beste Bewertung der Anzeigefläche mit der höchsten Anzahl sich überschneidender Anzeigeflächen zugewiesen wird,
Berechnen einer Zentrierung jedes Anzeigebereichs in Bezug auf den Anzeigebildschirm, wobei die beste Bewertung der zentrierten Anzeigebereich zugewiesen wird,
Berechnen einer Endbewertung für jeden Anzeigebereich und Auswahl des Anzeigebereichs als Hauptanzeigebereich, dessen assoziierte Endbewertung die maximale oder minimale Endbewertung ist,
- Aufzeichnen digitaler Bilder, die aus den Werten von Pixeln gebildet werden, die zu einem gegebenen Zeitpunkt in dem Hauptanzeigebereich (42) angezeigt werden sollen,
- Analysieren der aufgezeichneten digitalen Bilddaten, um Markierungsinformationen zu extrahieren, wobei die Markierungsinformationen ermöglichen, um Informationen über das Zugriffsrecht auf den Inhalt des Hauptvideostroms zu erlangen.

9. Computerprogramm, umfassend Softwareanweisungen, die, wenn sie von einer programmierbaren Vorrichtung implementiert werden, ein Multimediastrom-Verarbeitungsverfahren nach einem der Ansprüche 1 bis 7 implementieren.

## Claims

1. A method for processing multimedia streams for verifying access rights to a content of said multimedia stream, the multimedia stream being provided by a server device connected to a communication network, and downloadable by a client device via data formatted in a markup language, by using software for browsing and displaying data formatted in a markup language, cooperating with software for reading multimedia streams,
the multimedia stream comprising at least one video stream able to be displayed in the form of pixels in a display zone of a display screen of the client device,
**characterized in that** it comprises steps consisting of:
- the multimedia stream including at least two video streams comprising a main video stream and at least one additional video stream, the or each additional video stream being displayed on top of the main video stream, determining (64) for each video stream, an associated display zone, allocated by said browsing and display software to the software for reading multimedia streams in order to display a video stream extracted from said multimedia stream, and identifying (70) a main display zone, among the determined display zones, as being the display zone associated with the main video stream,
the identifying of the main display zone comprising at least one step for computing a score associated to each determined display zone among:
- calculating (102) a surface area occupied by each display zone, and associating scores in function of the surface occupied, the best score being associated to the display zone having the largest surface,
- calculating (104) a ratio between at least a first dimension and second dimension of each display zone, the associated score being dependent on a comparison of said ratio to a predetermined value, the display zone having the closest ratio to said predetermined value having the best score,
- calculating (106) a number of display zones at least partially superimposed on each display zone, the best score being assigned to a display zone having the highest number of display zones superposed thereon,
- calculating (108) a centering of each display zone with respect to the display screen, the best score being assigned to the centered display area,
- calculating a final score for each display area and selecting, as main display zone, of the display zone whose associated final score is the highest score or the lowest score,
- recording (72) digital images formed by values of the pixels to be displayed in the display zone determined at a given time,-analyzing (74) recorded image data to extract marking information, the marking information making it possible to obtain information relative to the right to access the contents of the main video stream.

2. The method according to claim 1, **characterized in that** the recording (72) is done at a predetermined temporal frequency, making it to possible to record a plurality of digital images of said video stream.

3. The method according to any one of claims 1 to 2, **characterized in that** the step for determining (64) a display zone implements an analysis of commands exchanged between the browsing and display software and the software for reading multimedia streams, based on a programming interface provided by said browsing and display software.

4. The method according to claim 3, **characterized in that** it comprises a step for intercepting (66) a command to create or initialize an executable instance of said software for reading multimedia streams.

5. The method according to one of claimed 3 or 4, **characterized in that** it comprises a step for determining a display mode from among a first mode and a second mode by analyzing a command to allocate a display zone sent by the browsing and display software and the software for reading multimedia streams.

6. The method according to claim 5, **characterized in that**, when the display mode is a first display mode, it comprises intercepting a command to update a display zone, and **in that** the recording of the values of the pixels to be displayed in the determined display zone is done after said interception of a command to update the determined display zone.

7. The method according to any one of claims 1 to 6, wherein the recorded pixel values form a digital image, **characterized in that** it comprises a step for analyzing recorded digital images making it possible to determine the digital images belonging to the main video stream and the digital images belonging to an additional video stream.

8. A device for processing multimedia streams, for verifying access rights to a content of said multimedia stream, the processing device comprising a central processing unit (24), a data storage unit (26), the processing device comprising or being connected to a display screen (30),
the multimedia stream being provided by a server device connected to a communication network, and downloadable by the processing device via data formatted in a markup language, while using software (32) for browsing and displaying data formatted in a markup language, cooperating with software (34) for reading multimedia streams, the multimedia stream comprising at least one video stream able to be displayed in the form of pixels in a display zone (42, 44, 46, 48) of said display screen (30),
**characterized in that** it comprises a module (36) suitable for:
- the multimedia stream including at least two video streams comprising a main video stream and at least one additional video stream, the or each additional video stream being displayed on top of the main video stream, determining, for each video stream, an associated display zone (42), allocated by said browsing and display software (32) to the software for reading multimedia streams (34) in order to display a video stream extracted from said multimedia stream,
and identifying a main display zone, among the determined display zones, as being the display zone associated with the main video stream,
the identifying of the main display zone comprising at least one step for computing a score associated to each determined display zone among:
- calculating a surface area occupied by each display zone, and associating scores in function of the surface occupied, the best score being associated to the display zone having the largest surface,
- calculating a ratio between at least a first dimension and second dimension of each display zone, the associated score being dependent on a comparison of said ratio to a predetermined value, the display zone having the closest ratio to said predetermined value having the best score,
- calculating a number of display zones at least partially superimposed on each display zone, the best score being assigned to a display zone having the highest number of display zones superposed thereon,
- calculating a centering of each display zone with respect to the display screen, the best score being assigned to the centered display area,
- calculating a final score for each display area and selecting, as main display zone, of the display zone whose associated final score is the highest score or the lowest score,
- recording digital images formed by values of the pixels to be displayed in the display zone (42) determined at a given time,
- analyzing recorded image data to extract marking information, the marking information making it possible to obtain information relative to the right to access the contents of the main video stream.

9. A computer program product comprising software instructions which, when implemented by a programmable device, implement a method for processing a multimedia stream according to any one of claims 1 to 7.
